(19) Europäisches Patentamt
European Patent Office
Office européen des brevets

(11) **EP 1 862 507 A1**

(12) **EUROPEAN PATENT APPLICATION**
published in accordance with Art. 158(3) EPC

(43) Date of publication:
**05.12.2007 Bulletin 2007/49**

(21) Application number: **06729787.9**

(22) Date of filing: **23.03.2006**

(51) Int Cl.:
*C08L 67/04* (2006.01)  *B42D 15/10* (2006.01)
*C08K 3/22* (2006.01)  *C08L 101/16* (2006.01)

(86) International application number:
**PCT/JP2006/305839**

(87) International publication number:
**WO 2006/104013 (05.10.2006 Gazette 2006/40)**

(84) Designated Contracting States:
**DE FR GB IT**

(30) Priority:  **25.03.2005  JP  2005089194**

(71) Applicant: **MITSUBISHI PLASTICS, INC.**
**Chiyoda-ku,**
**Tokyo 100-0005 (JP)**

(72) Inventor: **EGAWA, Yousuke**
**-8, Mitsuya-cho, Nagahama-shi, Shiga, 52 (JP)**

(74) Representative: **Gille Hrabal Struck Neidlein Prop Roos**
**Brucknerstrasse 20**
**40593 Düsseldorf (DE)**

(54) **POLYLACTIC ACID-BASED CARD MATERIAL AND CARD**

(57)  An object of the present invention is to provide a polylactic acid series card material combining excellent mechanical strength and resistance to hydrolysis even when a polylactic acid series polymer is used as a main component, and in addition, maintaining a sufficient transparency even when an aliphatic polyester is added. The present invention comprises, with respect to 100 parts in mass of resin composition constituted by 50 to 90 mass% of a polylactic acid series polymer (a), and 50 to 10 mass% of an aliphatic polyester (b) other than polylactic acid series polymer and having a glass transition temperature (Tg) of 0˚C or lower, 0.3 to 6 parts in mass of an aliphatic polycarbodiimide compound (c) having an isocyanate end further mixed.

**Description**

[Technical Field]

The present invention relates to a polylactic acid series card material. Specifically, it relates to a polylactic acid series card material having excellent resistance to hydrolysis (durability) and transparency.

[Background Art]

Conventionally, cards made of plastic are widely used for ID cards, membership cards and patient's registration cards, which identify individuals, cash cards and credit cards, which have monetary values, and the like. Polyvinyl chloride resins and non-crystalline polyester series resins are used as materials for these cards. These card materials are conventionally disposed of when their users have finished using them. Generally, the method for their disposal is incineration or landfill; however, when incinerating a vinyl chloride resin card material, the possibility of generating a toxic substance, such as dioxin, is a concern, and in the case of a card material from a non-crystalline polyester series resin, although there is no generation of toxic substance due to incineration, when landfilled, there is the problem of remaining in soil semi-permanently due to high chemical stability. In addition, and above all, since these resins have oil as starting materials, which is a limited resource, the problem of exhaustion of oil resources is a concern.

Recently, polylactic acid series polymers have become under the spotlights as materials to solve the above problems, and a number of researches and developments are actually being carried out. Polylactic acid series polymers do not have the problem of remaining semi-permanently in the soil, since hydrolysis occurs relatively easily due to the chemical constitution thereof and they are thereafter turned into harmless degradation products by microorganisms in the soil. In addition, as the starting source materials of polylactic acid series polymers are plant source materials, such as corn, the problem of resource exhaustion is also solved.

However, although these polylactic acid series polymers have the stiffness and transparency required for card materials, when a card is made with a single polylactic acid series polymer, being extremely brittle, the problem of cracking easily when folded, the problem of cracking of embossed letter occurring when embossing, and the like, exist.

In addition a problem is that, regardless of the fact that the application has aspects of durable consumer goods, the hydrolyzability of polylactic acid series polymers backfires, leading to a decrease in physical properties due to a decrease in the molecular weight after a long period elapsed or when the card has been left under high temperature and high humidity environment, and the cards practically no longer fulfill functions as cards.

In prior art, a variety of propositions have been made as methods for solving these problems.
For instance, in Japanese Patent Publication No. 3366845 and Japanese Patent Application Laid-Open No. 2000-141955, fabrication of a card material from a composition in which prescribed ratios of polylactic acid and an aliphatic polyester obtained by dehydration condensation of glycols and aliphatic dicarboxylic acid is disclosed. While the card material obtained from the above description certainly overcomes the brittleness that is a shortcoming of polylactic acid series polymers, there is the problem that resistance to hydrolysis when using over a long period of time is not improved, and in addition, the transparency of oversheet deteriorates due to the addition of the aliphatic polyester.

In Japanese Patent Publication No. 3427527, it is disclosed that mechanical strength and storage stability that are equivalent to polyvinyl chloride resin card material are provided by controlling the molecular weights of the polylactic acid series polymer and the thermoplastic resin added thereto; however the durability thereof is not sufficient, unable to sustain a use over a long period of time. In addition, the decrease in transparency due to the addition of an aliphatic polyester is not improved.

Meanwhile, in Japanese Patent Application Laid-Open No. 2002-205367, it is disclosed that resistance to folding and resistance to temperature and humidity increase by mixing prescribed ratios of polylactic acid and an aliphatic polyester obtained by dehydration condensation of glycols and a aliphatic dicarboxylic acid, and adding polycarbodiimide. However, with the polycarbodiimide used in the Publication, there is the problem that resistance to hydrolysis is not sufficient, and that excessive addition deteriorates transparency of the oversheet.

In Japanese Patent Application Laid-Open No. 2003-221499, a heat-shrinkable film is disclosed, having increased transparency by the addition of a polylactic acid series polymer, an aliphatic polyester and a polycarbodiimide compound with a shorter average main chain length than the above-mentioned resin; however, with the polycarbodiimide used in the Publication, it is difficult to combine both durability and transparency as card material.

Furthermore, in Japanese Patent Application Laid-Open No. 2004-155993, it is disclosed that resistance to hydrolysis is increased by adding an aliphatic polycarbodiimide compound having an isocyanate end to a biodegradable plastic; however, only addition to a single polylactic acid is described, and in addition, the object was to increase the resistance to hydrolysis only.

[Disclosure of the Invention]

[Problems to be Solved by the Invention]

Consequently, an object of the present invention is to provide a polylactic acid series card material combining excellent mechanical strength and resistance to hydrolysis even when a polylactic acid series polymer is used as a main component, and in addition, maintaining a sufficient transparency even when an aliphatic polyester is added.

Earnest studies were carried out to solve the above problems, and as a result, a prescribed proportion of an aliphatic polyester other than a polylactic acid series polymer was mixed to confer basic mechanical physical properties required as a card material, furthermore, a prescribed proportion of aliphatic polycarbodiimide compound having an isocyanate end was added to prevent the decrease in transparency occurring due to the addition of aliphatic polyester and to increase resistance to hydrolysis, which is required in a card material as a durable consumer goods, and completion of the present invention was reached.

The invention pertaining to the present application is the invention recited in (1) to (9) below.

(1) A polylactic acid series card material comprising, with respect to 100 parts in mass of a resin composition constituted by 50 to 90 mass% of a polylactic acid series polymer (a) and 50 to 10 mass% of an aliphatic polyester (b) other than a polylactic acid series polymer and having a glass transition temperature (Tg) of 0°C or lower, 0.3 to 6 parts in mass of an aliphatic polycarbodiimide compound (c) having an isocyanate end further mixed.

(2) The polylactic acid series card material as recited in (1), wherein the aliphatic polyester (b) furthermore has a melting point of 80°C or higher.

(3) The polylactic acid series card material as recited in (1) or (2), wherein the aliphatic polyester (b) is at least one species selected from the group comprising polybutylene succinate, polybutylene succinate adipate, polybutylene adipate terephthalate, polybutylene succinate adipate terephthalate, polybutylene succinate lactic acid, polybutylene succinate adipate lactic acid, polyethylene succinate, polybutylene succinate carbonate, co-polymer of polyhydroxy butyrate and polyhydroxyvalerate, and co-polymer of polyhydroxy butyrate and polyhydroxy hexanoate.

(4) The polylactic acid series card material for oversheet use as recited in any of (1) to (3), wherein the haze value is 30% or less, and the thickness is 20$\mu$m to 140$\mu$m.

(5) The polylactic acid series card material for oversheet use as recited in any of (1) to (4), wherein 0.01 to 3 parts in mass of mold release agent (d) is further mixed with respect to 100 parts in mass of the previous resin composition.

(6) The polylactic acid series card material for oversheet use as recited in (5), wherein the previous mold release agent is alkyl benzene sulfonate.

(7) The polylactic acid series card material for core sheet use as recited in any of (1) to (3), wherein the thickness is 50$\mu$m to 560$\mu$m.

(8) The polylactic acid series card material for core sheet use as recited in (7), wherein 3 to 25 parts in mass of titanium oxide (e) is further mixed with respect to 100 parts in mass of the previous resin composition.

(9) A polylactic acid series card comprising a thermally compression bonded laminate containing at least one layer or more of the polylactic acid series card material as recited in any of (1) to (8).

[Effects of the invention]

According to the present invention, a polylactic acid series card material can be provided, which combines excellent mechanical strength and resistance to hydrolysis even when a polylactic acid series polymer is used as a main component, in addition, which maintains sufficient transparency even when an aliphatic polyester is added, and furthermore, a card material can be provided, which does not exert a negative effect on the environment even when incinerated or landfilled, and moreover, allowing for departure from depleting oil resources.

[Best Mode to Carry Out the Invention]

Hereinafter, embodiments of the present invention will be described.
The polylactic acid series card material according to the present invention comprises, mixed with respect to 100 parts in mass of a resin composition constituted by 50 to 90 mass% of a polylactic acid series polymer (a) and 50 to 10 mass% of an aliphatic polyester (b) other than polylactic acid series polymer and having a glass transition temperature (Tg) of 0˚C or lower, a further 0.3 to 6 parts in mass of an aliphatic polycarbodiimide compound (c) having an isocyanate end, and as described below, can be used as an oversheet, which requires transparency, and also as a core sheet having white concealing properties.

(Oversheet)

In general, printing of a card is performed on the core sheet, and transparency is required for the oversheet, so that a user of the card sees, through the oversheet, the patterns printed on the core sheet. As polylactic acid series polymers and other aliphatic polyesters fundamentally do not demonstrate satisfactory compatibility, transparency decreases when another aliphatic polyester is added to a polylactic acid series polymer. However, the present inventors discovered that the decrease in transparency could be advantageously prevented by adding a suitable amount of aliphatic polycarbodiimide having an isocyanate end. Although the cause is not certain, it is thought that because not only carbodiimide groups react with hydroxyl groups and carboxyl groups, which the polylactic acid series polymer and the other aliphatic polyester have, the isocyanate ends also give rise to a similar reaction, resulting in a pseudo-co-polymer of the polylactic acid series polymer and the other aliphatic polyester to be formed more readily, and as a result, this becomes a satisfactory compatibilizer of the polylactic acid series polymer and the other aliphatic polyester, such that an oversheet is obtained, with a better transparency than with polycarbodiimide having a blocked end.
In addition, resistance to hydrolysis can be increased more than with the carbodiimide compound having a blocked end, by adding an aliphatic polycarbodiimide having an isocyanate end.
Regarding the proportions of resins when using for an oversheet, mixing 50 to 90 mass% of polylactic acid series polymer (a) and 50 to 10 mass% of the other aliphatic polyester (b) so as to obtain a total of 100 mass% is preferred. More preferred are 60 to 90 mass% of polylactic acid series polymer (a) and 40 to 10 mass% of the other aliphatic polyester (b).
If the polylactic acid series polymer is 50 mass% or more, the transparency required for the oversheet can be obtained sufficiently, and in addition, if 90 mass% or less, the oversheet has excellent impact-resistance, and no cracking of letters occurs during embossing.
In addition, it became clear that, when an aliphatic polycarbodiimide having an isocyanate end is added, further adding 0.01 to 3 parts in mass of mold release agent (d) with respect to 100 parts in mass of resin composition, is preferable when using as an oversheet. This is extremely desirable not only from the point of releasability from the polished plate during card fabrication, but also from the point of not losing at all the effects of transparency and resistance to hydrolysis due to the previous aliphatic polycarbodiimide having an isocyanate end, and in particular is a finding that compatibility when using both in combination is excellent. As mold release agents, alkyl benzene sulfonates are preferred, among which sodium alkyl benzene sulfonate is preferred.
From the point of ease of commercial availability, sodium lauryl benzene sulfonate, sodium dodecyl benzene sulfonate, and the like, may be cited. If an alkyl benzene sulfonate is used there are the advantages that not only the points of transparency and mold releasability, but also antistatic ability and printing suitability are excellent, such that sparks are less likely to occur in the press operation during card fabrication, and furthermore, defective sheet sending and splashing of ink due to static electricity at printing are less likely to occur. In addition, compatibility with aliphatic polycarbodiimide having an isocyanate end is extremely good. The amount of mold release agent to be added is more preferably 0.05 parts in mass to 2 parts in mass, and particularly preferably 0.1 parts in mass to 1 parts in mass.

Note that addition of a mold release agent to the core sheet has also an effect. That is to say, sometimes, the sizes of the core sheet that is to be laminated during card fabrication and the oversheet are different, with the core sheet being larger. In such a circumstance, even if used as a core sheet, mold releasability from the polished plate can be increased by adding a mold release agent similarly to an oversheet.

(Core sheet)

In addition, when using as a core sheet, since transparency is fundamentally not required in a core sheet, inorganic particles, such as titanium oxide (e), can be added, with the aim of conferring concealing properties. Titanium oxide is classified from the crystallinity thereof into anatase type, rutile type and brookite type, and any crystal system can be used. Although there is not particular limit in the amount thereof added on the order of 3 to 25 parts in mass with respect to 100 parts in mass of resin composition is preferred, since physical properties as card material are not compromised. Obviously, not adding an inorganic particle such as titanium oxide is not a problem.

Regarding the proportions of resins when used in a core sheet, mixing 50 to 90 mass% of polylactic acid series polymer (a) and 50 to 10 mass% of the other aliphatic polyester (b) so as to obtain a total of 100 mass% is preferred. If the polylactic acid series polymer is 50 mass% or more, a core sheet allowing for a sufficient retention of stiffness required as a card can be obtained, and if 90 mass% or less, the core sheet has excellent resistance to folding.

(Laminate Constitution)

The polylactic acid series card material according to the present invention is constituted generally by thermally compression bonding a laminate of a plurality of card materials such as the above-mentioned oversheets and core sheets, in order to obtain a card with a desired constitution and thickness. Herein, at least one layer or more polylactic acid series card materials of the present invention must be contained. In order to obtain a card that advantageously exerts the effects of the present invention, it is desirable to use the polylactic acid series card material of the present invention as an oversheet and as a core sheet, among which a constitution of a card wherein the entirety of the layers comprises the polylactic acid series card material of the present invention is most desirable.

Any of the following constitutions is preferred as a constitution of a card when the polylactic acid series card material for oversheet use and the polylactic acid series card material for core sheet use according to the present invention are laminated by thermal compression bonding.

    (1): (B)/(A)/(B)
    (2): (B)/(A)/(A)/(B)
    (3): (B)/(A)/(A)/(A)/(B)

(Herein, (A): core sheet; (B): oversheet)

The oversheets are placed on the two outermost layers in order to ensure protection of the ink printed on the core sheet and the visibility of the printed material. In addition, although fundamentally there is no problem if any number of layers of core sheet are wedged between the oversheets, the constitution of (1) is preferred when printing on one side, and when printing on both sides, considering the complexity of carrying out double-sided printing on one sheet with the constitution of (1), the constitution of (2) is preferred. Note that when layering a plurality of core sheets, the mixing ratio may be suitably modified according to the objective.

In addition when a function, such as a different fluidity, is needed for the core sheet (for instance, a card with a substrate featuring an IC chip placed in the middle of the card) the constitution of (3) is preferable. Layer constitution of (3) or above can be suitably selected taking into consideration the points of workability and production efficiency.

When the polylactic acid series card material according to the present invention is used in a thick card, the thickness of the oversheet is preferably $20\mu m$ to $140\mu m$, and in addition, the thickness of the core sheet is preferably $50\mu m$ to $560\mu m$, although this depends on the constitutions of (1) to (3).

In addition, when used in an oversheet, the haze value is preferably 30% or less.

(Polylactic acid series polymers)

The polylactic acid series polymer used in the present invention designates a homopolymer in which the structural unit is L-lactic acid or D-lactic acid, that is to say, poly(L-lactic acid) or poly(D-lactic acid), a co-polymer in which the structural unit is both L-lactic acid and D-lactic acid, that is to say, poly(DL-lactic acid), and mixtures thereof, and furthermore, may be a co-polymer with an $\alpha$-hydroxy carboxylic acid or a diol/dicarboxylic acid.

Any well-known methods can be adopted as the polymerization method for the polylactic acid series polymer, such as, condensation polymerization method and ring-opening polymerization method. For instance, with the condensation polymerization method, a polylactic acid series polymer having any composition can be obtained by a direct dehydration condensation polymerization of an L-lactic acid or a D-lactic acid, or a mixture thereof. In addition, with the ring-opening polymerization method, a polylactic acid series polymer can be obtained from a lactide, which is a cyclic dimer of lactic acid, using a chosen catalyst, and as necessary, while using a polymerization modifier, or the like. Lactides comprise L-lactide, which is a dimer of L-lactic acid, D-lactide, which is a dimer of D-lactic acid, and furthermore DL-lactide, which comprises L-lactic acid and D-lactic acid, and a polylactic acid series polymer having any composition and crystallinity can be obtained by mixing and polymerizing these, as necessary.

In addition, depending on necessities, such as increasing heat resistance, a non-aliphatic dicarboxylic acid, such as terephthalic acid, and a non-aliphatic diol, such as ethylene oxide adduct of bisphenol A, may be used as co-polymerization constituents in small amounts.

Furthermore, in addition, with the aim of increasing the molecular weight, a small amount of chain extender, for instance, a diisocyanate compound, an epoxy compound, an acid anhydride, or the like, can be used.

As the above other hydroxy-carboxylic acid units that are co-polymerized with the above polylactic acid series polymer, optical isomers of lactic acid (D-lactic acid with respect to L-lactic acid, and L-lactic acid with respect to D-lactic acid), bifunctional aliphatic hydroxy-carboxylic acids, such as, glycolic acid, 3-hydroxy butyric acid, 4-hydroxy butyric acid, 2-hydroxy-n-butyric acid, 2-hydroxy 3,3-dimethyl butyric acid, 2-hydroxy 3-methyl butyric acid, 2-methyl lactic acid and 2-hydroxy caproic acid, and lactones, such as, caprolactone, butyrolactone and valerolactone, may be cited.

As the above aliphatic diols that are co-polymerized with the above polylactic acid series polymer, ethylene glycol, 1,4-butanediol,1,4-cyclohexanedimethanol, and the like, may be cited. In addition, as the above aliphatic dicarboxylic acids, succinic acid, adipic acid, suberic acid, sebacic acid, dodecane diacid, and the like, may be cited.

The preferred range of weight average molecular weight of the above polylactic acid series polymer is 50,000 to 400,000, preferably 100,000 to 250,000, and if lower than this range, practical physical properties are almost not displayed, and if higher, the molten viscosity is too high, with poor molding processability.

(Aliphatic polyesters other than polylactic acid series polymers)

In addition, the aliphatic polyesters other than polylactic acid series polymers used in the present invention are components for conferring impact-resistance, resistance to folding, and furthermore, embossability, and the like, to the polylactic acid series card. As such aliphatic polyesters, polyhydroxy carboxylic acids, aliphatic polyesters or aliphatic aromatic polyesters obtained by condensing an aliphatic diol and an aliphatic dicarboxylic acid, or an aliphatic diol, an aliphatic dicarboxylic acid and an aromatic dicarboxylic acid, aliphatic polyester co-polymers obtained from an aliphatic diol, an aliphatic dicarboxylic acid, and a hydroxy carboxylic acid, aliphatic polyesters obtained by ring-opening polymerization of cyclic lactones, synthetic series aliphatic polyesters, aliphatic polyesters biosynthesized in a micro-organism, and the like, may be cited.

As polyhydroxy carboxylic acids, homopolymers and co-polymers of hydroxy carboxylic acids, such as, 3-hydroxy butyric acid, 4-hydroxy butyric acid, 2-hydroxy-n-butyric acid, 2-hydroxy-3,3-dimethyl butyric acid, 2-hydroxy-3-methyl butyric acid, 2-methyl lactic acid and 2-hydroxy caproic acid, and the like, may be cited.

As the above aliphatic diols, ethylene glycol, 1,4-butanediol, 1,4-cyclohexane dimethanol, and the like, may be cited. In addition, the above aliphatic dicarboxylic acids, succinic acid, adipic acid, suberic acid, sebacic acid, dodecane diacid, and the like, may be cited.

As the above aromatic dicarboxylic acids, terephthalic acid, isophthalic acid, and the like, may be cited. Aliphatic polyesters obtained by condensing these aliphatic diols and aliphatic dicarboxylic acids, and aliphatic aromatic polyesters obtained by condensing an aliphatic diol, an aliphatic dicarboxylic acid and an aromatic dicarboxylic acid can be obtained by respectively selecting and condensation polymerizing one or more species from among each of the above compounds, and in addition, as necessary, jumping up with an isocyanate compound, or the like, as the desired polymer.

In regard to the aliphatic diols and aliphatic carboxylic acids used in the aliphatic polyester co-polymers obtained from an aliphatic diol, an aliphatic dicarboxylic acid and a hydroxy carboxylic acid, similar ones to the above may be cited; in addition, in regard to hydroxy carboxylic acids, L-lactic acid, D lactic acid, DL lactic acid, glycolic acid, 3-hydroxy butyric acid, 4-hydroxy butyric acid, 2-hydroxy-n-butyric acid, 2-hydroxy 3,3-dimethyl butyric acid, 2-hydroxy 3-methyl butyric acid, 2-methyl lactic acid, 2-hydroxy caproic acid, and the like, may be cited, and for instance, polybutylene succinate lactic acid, polybutylene succinate adipate lactic acid, and the like, exist.

With the proviso that the composition ratios in this case is absolutely dominated by aliphatic diol and aliphatic dicarboxylic acid, which, in terms of mol%, is 35 to 49.99 mol% for aliphatic diol, 35 to 49.99 mol% for aliphatic dicarboxylic acid and 0.02 to 30 mol% for hydroxy carboxylic acid.

The aliphatic polyesters obtained by ring-opening polymerization of the above cyclic lactones are obtained by polymerizing one or more species of $\epsilon$-caprolactone, $\delta$-valerolactone, $\beta$-methyl-$\delta$-valerolactone, and the like, as a cyclic monomer.

As the above synthetic series aliphatic polyesters, co-polymers of cyclic acid anhydrides and oxiranes, for instance, succinic anhydride and ethylene oxide, propylene oxide, and the like, may be cited.

As the above aliphatic polyesters biosynthesized in a micro-organism, aliphatic polyester biosynthesized by acetyl coenzyme A (acetyl CoA) in a micro-organism, *Alcaligenes eutrophus* to begin with, may be cited. This aliphatic polyester biosynthesized in a micro-organism is mainly poly-β-hydroxy butyric acid (poly 3HB); however, in order to increase practical physical properties as plastics, it is industrially advantageous to co-polymerize with hydroxy valeric acid (HV) to turn into poly(3HB-CO-3HV) co-polymer. The co-polymerization ratio of HV is preferably 0 to 40 mol% in general. In addition, instead of hydroxy valeric acid, a long-chain hydroxy alkanoate, such as, 3-hydroxy hexanoate, 3-hydroxy octanoate or 3-hydroxy octadecanoate may be co-polymerized.

The glass transition temperature (Tg) of the above aliphatic polyester is preferably 0˚C or lower, and more preferably -20˚C or lower. If higher than 0˚C, improvement effects of impact-resistance and resistance to folding, furthermore, embossability and the like, are sometimes insufficient.

In addition, the melting point of the above biodegradable aliphatic series polyester is preferably 80˚C or higher. If the melting point is 80˚C or higher, heat resistance as card material becomes sufficient.

The aliphatic polyester (b) that can be used preferably in the present invention is at least one species selected from the group comprising, polybutylene succinate, polybutylene succinate adipate, polybutylene adipate terephthalate, polybutylene succinate adipate terephthalate, polybutylene succinate lactic acid, polybutylene succinate adipate lactic acid, polyethylene succinate, polybutylene succinate carbonate, co-polymer of polyhydroxy butyrate and polyhydroxyvalerate, and co-polymer of polyhydroxy butyrate and polyhydroxy hexanoate.

(Polycarbodiimide compounds)

Furthermore, the polycarbodiimide compound used in the present invention is preferably 0.3 to 6 parts in mass with respect to 100 parts in mass of mixture of polylactic acid series polymer and aliphatic polyester other than polylactic acid series polymer, and more preferably 1 to 3 parts in mass. If less than 0.3 parts in mass, the resistance to hydrolysis is sometimes insufficient, and if in excess of 6 parts in mass, transparency of the oversheet is sometimes compromised.

Polycarbodiimide compounds prepared by a variety of methods can be used, although fundamentally, those prepared by conventional polycarbodiimide preparation methods (for instance, Specifications, U.S. Patent No. 2941956, Japanese Patent Publication No. S47-33279, J. Org. Chem. 28,2069-2075 (1963),Chemical Review 1981, Vol.81 No. 4, p619-621) can be used.

As organic diisocyanates that are synthesis starting materials in the preparation of polycarbodiimide compounds, for instance aromatic diisocyanates, aliphatic diisocyanates, alicyclic tribe diisocyanates and mixtures thereof may be cited, and concretely, 1,5-naphthalene diisocyanate, 4,4'-diphenyl methane diisocyanate, 4,4'-diphenyl dimethyl methane diisocyanate, 1,3-phenylene diisocyanate, 1,4-phenylene diisocyanate, 2,4-tolylene diisocyanate, 2,6-tolylene diisocyanate, mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexyl methane-4,4'-diisocyanate, methyl cyclohexane diisocyanate, tetramethylxylylene diisocyanate, 2,6- diisopropyl phenyl isocyanate, 1,3,5-triisopropyl benzene-2,4-diisocyanate, and the like, can be given as examples, although aliphatic diisocyanates are preferred due to compatibility with polylactic acid series polymers and aliphatic polyesters other than polylactic acid series polymers, refractive index, and the like.

In addition, in the case of the above polycarbodiimide compound, the polymerization reaction can be stopped in the middle by cooling, or the like, for a control to an adequate degree of polymerization. In this case, isocyanate is at the end. Furthermore, in order to control to an adequate degree of polymerization, the entirety or part of the remaining terminal isocyanates can be blocked using a compound that reacts with the terminal isocyanate of the polycarbodiimide compound, such as, monoisocyanate.

As such monoisocyanates to control the degree of polymerization by blocking the end of the polycarbodiimide compound, for instance, phenyl isocyanate, tolyl isocyanate, dimethylphenyl isocyanate, cyclohexyl isocyanate, butyl isocyanate, naphthyl isocyanate, and the like, can be given as examples; however, polycarbodiimide compounds in which not all the terminal isocyanates are blocked and some are left untouched are preferred from the point of view of increase in resistance to hydrolysis and increase in transparency of the polylactic acid series card material, as described above.

The decarboxylation condensation reaction of the above organic diisocyanate is carried out in the presence of an adequate carbodiimidation catalyst, and as carbodiimidation catalysts that may be used, organic phosphorus series compounds and organometallic compounds (represented by the general formula M-(OR)$_4$ [where M represents titanium (Ti), sodium (Na), potassium (K), vanadium (V), tungsten (W), hafnium (Hf), zirconium (Zr), lead (Pb), manganese (Mn), nickel (Ni), calcium (Ca), barium (Ba), and the like, and R represents an alkyl group or an aryl group having from 1 up to 20 carbons]) are preferred, and in particular, from the aspect of activity, phospholene oxides for the organic phosphorus series compounds, and in addition, alkoxides of titanium, hafnium and zirconium for the organometallic compounds, are preferred.

As the above phospholene oxides, concretely, 3-methyl-1-phenyl-2-pholene-1-oxide, 3-methyl-1-ethyl-2-phospholene-1-oxide, 1,3-dimethyl-2-phospholene-1-oxide, 1-phenyl-2-phospholene-1-oxide, 1-ethyl-2-phospholene-1-oxide, 1-methyl-2-phospholene-1-oxide or double bonded isomers thereof can be given as examples, among which the industrially easily available 3-methyl-1-phenyl-2-phospholene-1-oxide is particularly preferred.

(Other additives and the like)

Furthermore, ancillary additives can be added to the polylactic acid series card material of the present invention to carry out a variety of modifications. As examples of ancillary additive stabilizer, oxidation inhibitors, ultraviolet light absorbents, pigments, electrostatic agents, conductive agents, mold release agents, plasticizers, antibacterial agents, nucleation agents and the like, and other similar ones, may be cited.

(Membrane fabrication method)

There are no particular limitations on the membrane fabrication methods for core sheet and oversheet, which are polylactic acid series card materials, and any well-known methods may be used for membrane fabrication, and for instance, the melt extrusion method by the T diecast method can be given as example. Since lactic acid series resins are highly hygroscopic and also highly hydrolysable, moisture control in the manufacturing process is necessary, such that when extruding using a generic uniaxial extruder, membrane fabrication is carried out after moisture removal and drying with a vacuum drier or the like. In addition, in membrane fabrication with a vent type twin-screw extruder, the dehydration effect is high, such that an effective membrane fabrication is possible, and in addition, multilayering by a plurality of extruders is also possible.

The melt extrusion temperature is selected suitably by taking into consideration the composition and the melt temperature of the composition, and in general is chosen from the range of 150 to 200°C. The composition that has been melt formed by the extruder is brought into contact with a rotating casting drum and cooled to obtain the desired core sheet and oversheet.

[Examples]

Examples will be shown hereinafter; however, the present invention is not limited in any way by these. Note that the physical property values in the examples and comparative examples were measured and evaluated by the following methods.

(1) Card forming

Core sheets and oversheets that have been trimmed to 100mm × 300mm were superposed so as to obtain any of the constitution shown below, and after heating in a steam type press machine at a heat temperature of 130°C and a pressure of 2MPa, heat pressing was carried out for 10 minutes, and then a laminate for card use was obtained by cooling to room temperature.

    (1): (B)/(A)/(B)
    (2): (B)/(A)/(A)/(B)
    (3): (B)/(A)/(A)/(A)/(B)

(Herein, (A): core sheet; (B): oversheet.)
A card was obtained by punching the laminate so that, roughly, the long side was 85.6mm and the short side was 54.0mm.

(2) Impact-resistance 1

Using a hydro-shot impact tester (Model HTM-1) manufactured by Toyo Seiki, an impact core with a diameter of 1/2 inches was caused to collide the card with a velocity of 3m/sec at a temperature of 23°C, and the energy required for destruction was calculated.

(3) Impact-resistance 2

According to JIS X6301, a card was placed on a robust horizontal plate, a 500g steel ball was dropped from a height of 30cm onto the card, and breaks and cracks on the card were evaluated visually. A card with no problem in terms of appearance such as breaks and cracks was noted with a circle, and for a card with a problem, the problem was noted.

(4) Interlayer adhesive strength

The interlayer adhesive strength was measured according to JIS X6301, 8.1.8 evaluation interlayer peeling, and a value of 6N/cm or greater was considered satisfactory.

(5) Resistance to folding

A card is folded by hand into an R-shape so that the short sides of the card are contacting each other. The above manipulation was repeated 20 times, and breaks and cracks on the card were evaluated visually. A card with no problem in terms of appearance such as breaks and cracks was noted with a circle, and for a card with a problem, the problem was noted.

(6) Resistance to hydrolysis 1

A card was left under the conditions of 60˚C × 80%RH, the card was taken out after 10, 20, 30 and 40 days, a similar test to the above resistance to folding was carried out, and breaks and cracks on the card were evaluated visually. A card with no problem in terms of appearance such as breaks and cracks was noted with a circle, and for a card with a problem, the problem was noted.

(7) Resistance to hydrolysis 2

A card was left under the conditions of 60˚C × 80%RH, the card was taken out after 40 days, and the molecular weight retention was calculated by the following formula.

$$\text{molecular weight retention (\%)} = (\text{molecular weight after 40 days})/(\text{initial molecular weight}) \times 100$$

(8) Embossability

Using a manual letter embossing machine (model DC830) manufactured by Datacard Japan Co. embossed letters were stamped onto a card. Breaks and cracks in the embossed letters were evaluated visually. A card with no problem in terms of appearance such as breaks and cracks was noted with a circle, and for a card with a problem, the problem was noted.

(9) Warping

Embossed letters were stamped onto a card similarly to the above method, and according to JIS X6301, and a card with a maximum value of 2.5 mm or less (including the thickness of the card) from the plane of the surface plate was considered satisfactory.

(10) Haze (transparency)

A single oversheet with a thickness of 100μm was pressed by a similar method to "Card forming", and the haze was measured according to JIS K7105. Note that a card with a haze value of 30% or less was considered satisfactory.

(Species of polycarbodiimide)

The following polycarbodiimides were used in the present examples and comparative examples.

<PCI 1>

One hundred parts in mass of 4,4'-dicyclohexyl methane diisocyanate and, as a carbodiimide catalyst, 0.5 parts in mass of 3-methyl-1-phenyl-2-phospholene-1-oxide were added, and carbodiimidation reaction was carried out at 190˚C for 30 hours. The NCO% of the obtained carbodiimide compound having an isocyanate end was 2.0, and the average degree of polymerization was 15.

<PCI 2>

A carbodiimidation reaction was carried out at 185˚C for 24 hours using the same starting material and catalyst as above. The NCO% of the obtained carbodiimide compound having an isocyanate end was 2.5, and the average degree of polymerization was 15.

<PCI 3>

"CARBODILITE HMV-8CA", an aliphatic polycarbodiimide that does not contain an isocyanate end, manufactured by Nisshinbo Industries, Inc.

<PCI 4>

"STABAXOL P", an aromatic carbodiimide compound manufactured by Rhein Chemie.

(Aliphatic polyester other than polylactic acid series polymer)

The following aliphatic polyesters other than polylactic acid series polymers were used in the present examples and comparative examples.

<PES 1>

BIONOLLE #3001: polybutylene succinate adipate (manufactured by Showa Highpolymer Co. Ltd.)
Melting point: 93˚C; glass transition temperature: -40˚C

<PES 2>

AD92W: polybutylene succinate adipate lactic acid (manufactured by Mitsubishi Chemical Corporation)
Melting point: 87˚C; glass transition temperature: -40˚C

<PES 3>

AZ91T: polybutylene succinate lactic acid (manufactured by Mitsubishi Chemical Corporation)
Melting point: 110˚C; glass transition temperature: -35˚C

<PES 4>

Ecoflex: polybutylene adipate terephthalate (manufactured by BASF) Melting point: 109˚C, glass transition point: -30˚C

(Preparation of each base material)

Regarding the oversheets and the core sheets, they were prepared respectively by the methods shown below.

(Oversheet)

<B1>

NatureWorks 4050D, manufactured by Cargill Dow, serving as a polylactic acid series polymer, and BIONOLLE #3001 (polybutylene succinate adipate; melting point: 93˚C; glass transition temperature: -40˚C) manufactured by Showa Highpolymer Co. Ltd. serving as an aliphatic polyester other than from polylactic acid series, were mixed so as to have polylactic acid series polymer/aliphatic polyester = 75/25 mass%, and with respect to 100 parts in mass of these resin compositions, one part of PCI 2 was mixed, and the mixture was extruded at 220˚C from a monolayer mouthpiece into a sheet shape with a 25mm⌀ co-rotating twin-screw extruder. This extruded sheet was rapidly cooled on a casting roll

EP 1 862 507 A1

at approximately 43°C to obtain an unstretched oversheet with a thickness of 100μm.

<B2 to B13>

Unstretched oversheets with formulations and thickness as shown in Table 1 and Table 2 were obtained by a similar method to <B1>. Note that NatureWorks 4050D manufactured by Cargill Dow was used for all the polylactic acid series polymers.

<B14>

NatureWorks 4050D, manufactured by Cargill Dow, serving as a polylactic acid series polymer, and BIONOLLE #3001 (polybutylene succinate adipate; melting point: 93°C; glass transition temperature: -40°C) manufactured by Showa Highpolymer Co. Ltd. serving as an aliphatic polyester other than [from the] polylactic acid series, were mixed so as to have polylactic acid series polymer/aliphatic polyester = 75/25 mass%, and with respect to 100 parts in mass of these resin compositions, one part of PCI 2, and 0.4 parts of sodium dodecyl benzene sulfonate, which is one among alkyl benzene sulfonates, as a mold release agent with the aim of increasing the effect of demolding from the polished plate used when thermal compression bonding the laminate, were mixed, and the mixture was extruded at 220°C from a monolayer mouthpiece into a sheet shape with a 25mm∅ co-rotating twin-screw extruder. This extruded sheet was rapidly cooled on a casting roll at approximately 43°C to obtain an unstretched oversheet with a thickness of 100μm.
[Table 1]

| Oversheet | B1 | B2 | B3 | B4 | B5 | B6 | B7 |
|---|---|---|---|---|---|---|---|
| Thickness (μm) | 100 | 100 | 100 | 100 | 100 | 100 | 100 |
| Polylactic acid series polymer (mass%) | 75 | 75 | 75 | 65 | 85 | 75 | 75 |
| Aliphatic polyester (mass%) | 25 | 25 | 25 | 35 | 15 | 25 | 25 |
| Species of aliphatic polyester | PES 1 | PES 1 | PES 1 | PES 1 | PES 1 | PES 2 | PES 2 |
| Polycarbodiimide (parts in mass) | 1 | 2 | 2 | 2 | 2 | 2 | 4 |
| Species of polycarbodiimide compound | PCI 2 | PCI 2 | PCI 1 | PCI 2 | PCI 2 | PCI 2 | PCI 2 |

[Table 2]

| Oversheet | B8 | B9 | B10 | B11 | B12 | B13 | B14 |
|---|---|---|---|---|---|---|---|
| Thickness (μm) | 100 | 100 | 100 | 100 | 100 | 50 | 100 |
| Polylactic acid series polymer (mass%) | 95 | 75 | 75 | 75 | 40 | 75 | 75 |
| Aliphatic polyester (mass%) | 5 | 25 | 25 | 25 | 60 | 25 | 25 |
| Species of aliphatic polyester | PES 1 | PES 1 | PES 1 | PES 1 | PES 1 | PES 1 | PES 1 |
| Polycarbodiimide (parts in mass) | 2 | 0 | 2 | 2 | 2 | 2 | 1 |
| Species of polycarbodiimide compound | PCI 2 | - | PCI 3 | PCI 4 | PCI 2 | PCI 2 | PCI 2 |
| Sodium dodecyl benzene sulfonate (parts in mass) | | | | | | | 0.4 |

(Core sheet)

<A1>

To a polylactic acid series polymer, in which NatureWorks 4032D manufactured by Cargill Dow and NatureWorks 4050D also manufactured by Cargill Dow were mixed so that the ratio thereof was a ratio of 4032D/4050D=55/45, serving as a polylactic acid series polymer, AZ91T (polybutylene succinate lactic acid; melting point: 110°C; glass transition temperature: -35°C) manufactured by Mitsubishi Chemical Corporation, serving as an aliphatic polyester other than from polylactic acid series, was mixed so as to have polylactic acid series polymer/aliphatic polyester = 75/25 mass%, and with respect to 100 parts in mass of these resin compositions, one part of PCI 2 and 8 parts of rutile type titanium oxide were mixed, and the mixture was extruded at 220˚C from a monolayer mouthpiece into a sheet shape with a 25mm∅ co-rotating twin-screw extruder. This extruded sheet was rapidly cooled on a casting roll at approximately 43˚C to obtain an unstretched core sheet with a thickness of 280μm.

<A2 to A17>

Unstretched core sheets with formulations and thickness as shown in Table 3 and Table 4 were obtained by a similar method to <A1>. Note that for the polylactic acid series polymer and titanium oxide, the same polylactic acid series polymer and titanium oxide as those used in <A1> were used.
[Table 3]

| Core sheet | A1 | A2 | A3 | A4 | A5 | A6 | A7 | A8 | A9 |
|---|---|---|---|---|---|---|---|---|---|
| Thickness (μm) | 280 | 280 | 280 | 280 | 280 | 280 | 280 | 280 | 280 |
| Polylactic acid series polymer (mass%) | 75 | 75 | 75 | 65 | 85 | 75 | 75 | 95 | 75 |
| Aliphatic polyester (mass%) | 25 | 25 | 25 | 35 | 15 | 25 | 25 | 5 | 25 |
| Species of aliphatic polyester | PES 3 | PES 3 | PES 3 | PES 3 | PES 3 | PES 4 | PES 4 | PES 3 | PES 3 |
| Polycarbodiimide (parts in mass) | 1 | 2 | 2 | 2 | 2 | 2 | 4 | 2 | 0 |
| Species of polycarbodiimide compound | PCI 2 | PCI 2 | PCI 1 | PCI 2 | PCI 2 | PCI 2 | PCI 2 | PCI 2 | - |
| Titanium oxide (parts in mass) | 8 | 8 | 8 | 8 | 8 | 8 | 8 | 8 | 8 |

[Table 4]

| Core sheet | A10 | A11 | A12 | A13 | A14 | A15 | A16 | A17 |
|---|---|---|---|---|---|---|---|---|
| Thickness (μm) | 280 | 280 | 280 | 560 | 140 | 330 | 280 | 280 |
| Polylactic acid series polymer (mass%) | 75 | 75 | 40 | 75 | 75 | 75 | 75 | 75 |
| Aliphatic polyester (mass%) | 25 | 25 | 60 | 25 | 25 | 25 | 25 | 25 |
| Species of aliphatic polyester | PES 3 | PES 3 | PES 3 | PES 3 | PES 3 | PES 3 | PES 3 | PES 3 |
| Polycarbodiimide (parts in mass) | 2 | 2 | 2 | 2 | 2 | 2 | 2 | 2 |
| Species of polycarbodiimide compound | PCI 3 | PCI 4 | PCI 2 | PCI 2 | PCI 2 | PCI 2 | PCI 2 | PCI 2 |
| Titanium oxide (parts in mass) | 8 | 8 | 8 | 8 | 8 | 8 | 5 | 16 |

[Example 1]

Oversheets <B1> and core sheets <A1> were superposed so as to obtain the constitution B/A/A/B and pressed by the method described in the "Card forming" section to obtain a card.

[Examples 2 to 13]

Cards were obtained with the constitutions shown in Table 5, by a similar method to Example 1.

[Comparative examples 1 to 5]

Cards were obtained with the constitutions shown in Table 6, by a similar method to Example 1.
[Table 5]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Oversheet | | B1 | B2 | B3 | B4 | B5 | B6 | B7 | B2 | B2 | B2 | B2 | B13 | B14 |
| Core sheet | | A1 | A2 | A3 | A4 | A5 | A6 | A7 | A16 | A17 | A13 | A14 | A15 | A1 |
| Card constitution | | (2) | (2) | (2) | (2) | (2) | (2) | (2) | (2) | (2) | (1) | (3) | (2) | (2) |
| Impact-resistance 1 | Kgf·mm | 594 | 603 | 570 | 640 | 320 | 623 | 636 | 615 | 480 | 602 | 594 | 540 | 580 |
| Impact·resistance 2 | | ○ | ○ | ○ | ○ | ○ | ○ | ○ | ○ | ○ | ○ | ○ | ○ | ○ |
| Interlayer adhesive strength between over/core | N/cm | 27.1 | 22.1 | 26.2 | 31.1 | 21.1 | 22.6 | 23.1 | 30.1 | 21.4 | 22.3 | 23.3 | 19.8 | 26.3 |
| Interlayer adhesive strength between core/core | N/cm | 38.4 | 35.4 | 36.2 | 40.2 | 33.5 | 36.1 | 34.7 | 41.1 | 33.3 | - | 32.2 | 43.1 | 37.8 |
| Resistance to folding | | ○ | ○ | ○ | ○ | ○ | ○ | ○ | ○ | ○ | ○ | ○ | ○ | ○ |
| Resistance to hydrolysis 1 | | ○ | ○ | ○ | ○ | ○ | ○ | ○ | ○ | ○ | ○ | ○ | ○ | ○ |
| Resistance to hydrolysis 2 | % | 95.8 | 98.2 | 97.3 | 96.3 | 99.1 | 98.4 | 98.7 | 98.1 | 97.6 | 98.1 | 98.6 | 98.9 | 95.9 |
| Embossability | | ○ | ○ | ○ | ○ | ○ | ○ | ○ | ○ | ○ | ○ | ○ | ○ | ○ |
| Warping | mm | 1.2 | 1.2 | 1.1 | 1.7 | 1 | 1.5 | 1.5 | 1.4 | 1 | 1.2 | 1.2 | 1.1 | 1.1 |
| Transparency | % | 14 | 16 | 16 | 18 | 11 | 14 | 18 | 16 | 16 | 16 | 16 | - | 14 |
| Overall evaluation | | ○ | ○ | ○ | ○ | ○ | ○ | ○ | ○ | ○ | ○ | ○ | ○ | ○ |

EP 1 862 507 A1

Constitutions

(1): B/A/B
(2): B/A/A/B
(3): B/A/A/A/A/B

(Herein, A: core sheet; B: oversheet.)
[Table 6]

| | | Comparative example 1 | Comparative example 2 | Comparative example 3 | Comparative example 4 | Comparative example 5 |
|---|---|---|---|---|---|---|
| Oversheet | | B8 | B9 | B10 | B11 | B12 |
| Core sheet | | A8 | A9 | A10 | A11 | A12 |
| Card constitution | | (2) | (2) | (2) | (2) | (2) |
| Impact-resistance 1 | Kgf·mm | 25 | 580 | 574 | 562 | 672 |
| Impact-resistance 2 | | crack | ○ | ○ | ○ | ○ |
| Interlayer adhesive strength between over/core | N/cm | 24.1 | 25.3 | 27.2 | 33.1 | 31.1 |
| Interlayer adhesive strength between core/core | N/cm | 37.2 | 33.4 | 56.2 | 54.2 | 53.5 |
| Resistance to folding | | break | ○ | ○ | ○ | ○ |
| Resistance to hydrolysis 1 | | break | break | break | break | ○ |
| Resistance to hydrolysis 2 | % | 98.8 | 2.8 | 24.3 | 32.1 | 94.1 |
| Embossability | | break | ○ | ○ | ○ | ○ |
| Warping | mm | 1 | 1.2 | 1.2 | 1.1 | 2.8 |
| Transparency | % | 10 | 35 | 55 | 62 | 58 |
| Overall evaluation | | × | × | × | × | × |

Constitutions

(1): B/A/B
(2): B/A/A/B
(3): B/A/A/A/A/B

(herein, A: core sheet; B: oversheet.)

[Results]

As shown in Table 5, in regard to Examples 1 to 13, there was no problem in any of the evaluation items, demonstrating that they have satisfactory capabilities as card materials and as cards.

In addition, in regard to Example 13, compared to Example 1, mold releasability from the polished plate was further increased without impairing transparency, which makes it an excellent embodiment.

On the other hand, in regard to Comparative Example 1, due to the low amount of aliphatic polyester other than polylactic acid series polymer mixed, there were problems in resistance to folding, impact-resistance, and furthermore, in embossability.

In regard to Comparative Examples 2 to 4, all had problems in transparency, and in addition, there were also problems in resistance to hydrolysis (durability). In Comparative Example 5, due to excessive amount of aliphatic polyester other than polylactic acid series polymer mixed, there were problems in transparency and warping.

## Claims

1. A polylactic acid series card material comprising, with respect to 100 parts in mass of a resin composition constituted by 50 to 90 mass% of a polylactic acid series polymer (a) and 50 to 10 mass% of an aliphatic polyester (b) other than a polylactic acid series polymer and having a glass transition temperature (Tg) of 0˚C or lower, 0.3 to 6 parts in mass of an aliphatic polycarbodiimide compound (c) having an isocyanate end further mixed.

2. The polylactic acid series card material as recited in Claim 1, wherein said aliphatic polyester (b) furthermore has a melting point of 80˚C or higher.

3. The polylactic acid series card material as recited in Claim 1 or 2, wherein said aliphatic polyester (b) is at least one species selected from the group comprising polybutylene succinate, polybutylene succinate adipate, polybutylene adipate terephthalate, polybutylene succinate adipate terephthalate, polybutylene succinate lactic acid, polybutylene succinate adipate lactic acid, polyethylene succinate, polybutylene succinate carbonate, co-polymer of polyhydroxy butyrate and polyhydroxy valerate, and co-polymer of polyhydroxy butyrate and polyhydroxy hexanoate.

4. The polylactic acid series card material for oversheet use as recited in any one claim of Claims 1 to 3, wherein the thickness is 20μm to 140μm, and the haze value is 30% or less.

5. The polylactic acid series card material for oversheet use as recited in any one claim of Claims 1 to 4, wherein 0.01 to 3 parts in mass of mold release agent (d) is further mixed with respect to 100 parts in mass of said resin composition.

6. The polylactic acid series card material for oversheet use as recited in Claim 5, wherein said mold release agent is alkyl benzene sulfonate.

7. The polylactic acid series card material for core sheet use as recited in any one claim of Claims 1 to 3, wherein the thickness is 50μm to 560μm.

8. The polylactic acid series card material for core sheet use as recited in Claim 7, wherein 3 to 25 parts in mass of titanium oxide (e) is further mixed with respect to 100 parts in mass of said resin composition.

9. A polylactic acid series card comprising a thermally compression bonded laminate containing at least one layer or more of the polylactic acid series card material as recited in any one claim of Claims 1 to 8.

| **INTERNATIONAL SEARCH REPORT** | International application No. |
|---|---|
| | PCT/JP2006/305839 |

A. CLASSIFICATION OF SUBJECT MATTER
*C08L67/04*(2006.01), *B42D15/10*(2006.01), *C08K3/22*(2006.01), *C08L101/16*
(2006.01)

According to International Patent Classification (IPC) or to both national classification and IPC

B. FIELDS SEARCHED

Minimum documentation searched (classification system followed by classification symbols)
C08L67/04, B42D15/10, C08K3/22, C08L101/16

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 2005-232225 A  (Unitika Ltd.),<br>02 September, 2005 (02.09.05),<br>Claims; Par. Nos. [0014] to [0016], [0032]<br>(Family: none) | 1-9 |
| X | JP 2002-205367 A  (Gunze Ltd.),<br>23 July, 2002 (23.07.02),<br>Claims; Par. Nos. [0012] to [0017], [0019] to<br>[0028], [0040], [0043]; examples<br>(Family: none) | 1-9 |
| A | JP 2003-221499 A  (Gunze Ltd.),<br>05 August, 2003 (05.08.03),<br>Claims<br>(Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 May, 2006 (10.05.06) | 30 May, 2006 (30.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

# EP 1 862 507 A1

**INTERNATIONAL SEARCH REPORT**

| International application No. |
| --- |
| PCT/JP2006/305839 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 9-111107 A  (Mitsubishi Plastics, Inc.), 28 April, 1997 (28.04.97), Claims (Family: none) | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3366845 B
- JP 2000141955 A
- JP 3427527 B
- JP 2002205367 A
- JP 2003221499 A
- JP 2004155993 A
- US 2941956 A
- JP 47033279 A

**Non-patent literature cited in the description**

- *J. Org. Chem.,* 1963, vol. 28, 2069-2075
- *Chemical Review,* 1981, vol. 81 (4), 619-621